# EUROPEAN PATENT SPECIFICATION

(11) **EP 1 683 428 B1**
(45) Date of publication and mention of the grant of the patent: **16.03.2016**
(21) Application number: 04818459.2
(22) Date of filing: 08.11.2004
(51) Int. Cl.: A23L 27/20, A23L 27/00, A23L 15/00, A23L 23/00, A23L 13/00, A23L 5/20, A23L 35/00, A23L 27/10, A23L 33/10

(54) **METHOD OF UTILIZING BODY TASTE IMPROVER COMPRISING LONG-CHAIN HIGHLY UNSATURATED FATTY ACID AND/OR ESTER THEREOF**
VERFAHREN ZUR VERWENDUNG EINES MITTELS ZUR VERBESSERUNG DER KÖRPER-GESCHMACKSKOMPONENTE, DAS LANGKETTIGE HOCHUNGESÄTTIGTE FETTSÄUREN UND/ODER ESTER DAVON ENTHÄLT
PROCEDE D'UTILISATION D'UN EXHAUSTEUR DE GOUT COMPRENANT UN ACIDE GRAS FORTEMENT INSATURE A LONGUE CHAINE ET/OU UN ESTER CORRESPONDANT

(30) Priority: 12.11.2003 JP 2003382686
(43) Date of publication of application: 26.07.2006
(73) Proprietor: Ajinomoto Co., Inc., Tokyo 104-8315 (JP)
(72) Inventor: YAMAGUCHI, Susumu, c/o J-OIL MILLS, INC., Yokohama-shi, Kanagawa 230 0053 (JP); BABA, Keiko, c/o J-OIL MILLS, INC., Yokohama-shi, Kanagawa 2300053 (JP); TASHIMA, Ikukazu, c/o J-OIL MILLS, INC., Yokohama-shi Kanagawa 2300053 (JP); MATSUZAKI, Narihide, c/o J-OIL MILLS, INC., Yokohama-shi Kanagawa 2300053 (JP); KAWAGUCHI, Hirokazu, c/o AJINOMOTO CO., INC., Kawasaki-shi, Kanagawa 2108681 (JP); HAYASHI, Kazuhiro, c/o AJINOMOTO CO., INC., Kawasaki-shi, Kanagawa 2108681 (JP); KURODA, Motonaka, c/o AJINOMOTO CO., INC., Kawasaki-shi, Kanagawa 2108681 (JP)
(74) Representative: Strehl Schübel-Hopf & Partner
(86) International application number: PCT/JP2004/016516
(87) International publication number: WO 2005/046353

(56) References cited:
- WO-A-03/051139
- JP-A- 8 311 485
- JP-A- 2001 226 693
- JP-A- 2002 095 439
- US-A- 3 689 289
- DATABASE WPI Week 200342 Derwent Publications Ltd., London, GB; AN 2003-443509 XP002441266 & JP 2002 325558 A (NIPPON HAM KK) 12 November 2002 (2002-11-12)
- DATABASE WPI Week 199735 Derwent Publications Ltd., London, GB; AN 1997-380153 XP002441267 & JP 09 163957 A (KAMODA KK) 24 June 1997 (1997-06-24)
- DATABASE WPI Week 199316 Derwent Publications Ltd., London, GB; AN 1993-130609 XP002441268 & JP 05 068506 A (NIPPON SYNTHETIC CHEM IND CO) 23 March 1993 (1993-03-23)

## Description

### Technical Field

The present invention relates to a method of application of a body taste (or "kokumi" taste) enhancer comprising a long-chain highly unsaturated fatty acid and/or an ester thereof, more particularly to a method for enhancing or making better flavor or taste of food by means of the long-chain highly unsaturated fatty acid and/or the ester thereof, the body taste enhancer comprising thereof, or a vegetable fat and oil composition comprising thereof.

### Background of the Invention

Arachidonic acid (cis-5,8,11,14-eicosatetraenoic acid) belongs to long-chain highly unsaturated (polyunsaturated) fatty acids, and exists in a phospholipid derived from animal organs or tissues. This fatty acid is an essential one, and is very important as a precursor for the synthesis of prostaglandin, thromboxane, leukotriene, etc

Attempts have been made to add the long-chain highly unsaturated fatty acids such as arachidonic acid and esters thereof for enrichment of nutrition and provision of various physiological functions in view of the above remarkable functions of arachidonic acid.

An enriched composition described in Japanese Patent Application laid open Hei 10 (1998)-99048 comprises arachidonic acid in an amount of 0.1∼10 % by weight as one of the components added for realizing a composition similar to that of mother's milk.

As an example of the above ester, Japanese Patent Application laid open Hei 4 (1992)-197134 discloses fat and oil composition for frying, which is protected against a decrease in temperature of an inner material due to evaporation latent heat. The composition comprises as constituting fatty acid unsaturated fatty acids such as arachidonic acid in an amount of 20-60 % by weight.

Japanese Patent Application laid open Hei 9 (1997)-13075 discloses fat and oil consisting of glyceride comprising long-chain highly unsaturated fatty acids such as arachidonic acid, and having a function of reducing the concentration of fatty and oil in blood. The glyceride is obtained by transesterification. It has a different structure from natural one, in which less than 40 mol % of the total long-chain highly unsaturated fatty acids are bound to 2 position of the glyceride.

Japanese Patent Application laid open Hei 9 (1997)-13076 discloses fat and oil with the same composition as the above one, having a function of inhibiting platelet aggregation.

Japanese Patent Application laid open Hei 11 (1999)-89513 discloses a synthetic fat and oil composition similar to human milk fat and oil, in which n-6 long-chain highly unsaturated fatty acid such as arachidonic acid, is used as one of the constituting fatty acids of triglyceride.

Furthermore, Japanese Patent Application laid open Hei 10 (1998)-70992 and Japanese Patent Application laid open Hei 10 (1998)-191886 disclose edible oil derived from microorganism, which has a lot of arachidonic acid in a form of triglyceride. Its preferred application includes modified milk for a premature baby or an infant, food for infant, and food for a pregnant woman.

However, there is no disclosure of technology about use of the long-chain highly unsaturated fatty acid for the purpose of enhancing taste such as a body taste of foods and vegetable fat and oil, or no description to suggest a possibility to do that.

There has been a problem that the addition of the long -chain highly unsaturated fatty acid to foods would deteriorate their taste due to odor smell reversion flavor derived from oxidized decomposition of the fatty acid. Many means have been tried to solve the problem.

One of the those means is disclosed in the Japanese Patent Application laid open Sho 63 (1988)-44843 wherein a highly unsaturated fatty acid is included in an inner oil phase of an oil-in-water-in-oil-type emulsion composition. The Japanese Patent Application laid open Hei 6 (1994)-172782 discloses technology of pulverizing fat and oil comprising a highly unsaturated fatty acid. The Japanese Patent Application laid open Hei 9 (1997)-176679 discloses technology of mixing anti-oxidant powder with a pulverized unsaturated fatty acid. The Japanese Patent Application laid open Hei 9 (1997)-263784 discloses technology of mixing δ-tocopherol with fat and oil comprising a polyunsaturated fatty acid. The Japanese Patent Application laid open Hei 11 (1999)-12592 discloses technology of adding soybean source to fish fat and oil comprising a highly unsaturated fatty acid.

The Japanese Patent Application laid open 2001-78702 discloses as an example of application of highly unsaturated fatty acids in the field of food a seasoning having enriched mildness, "umami" taste, and after taste, which is prepared by mixing fat and oil with extract into an oil-in-water-type emulsion. Fish oil or fat and oil comprising the fish oil is disclosed as an example of the above fat and oil, including one wherein 10 % by weight or more of the fish oil is made of n-3 (ω-3) highly unsaturated fatty acids.

It is preferred to use a fatty acid ester of polyglycerine as emulsifier and to use extract wherein an antioxidant such as carnosine and anserine for preventing oxidization of the fat and oil. No oxidization treatment such as heating treatment is not carried out in a process for the reparation of the seasoning. Examples of foods on which the effect of the seasoning is significantly performed include minced products, fish and processed fish products.

The Japanese Patent No.3220155 discloses a flavoring composition which is prepared by oxidization of fatty acids except milk fat and is characterized by comprising at least one of polyunsaturated fatty acids with n-3 non-conjugated double bond in an amount of more than 0.01 % by weight. This flavoring composition comprises swe et and creamy note that is remarkably recognized in butter-like flavor. In order to obtain such note, the fat and oil need to be subjected to oxidization treatment, which has to be carried out under control during a process in the presence of an anti-oxidant that will slightly delay the oxidization. As the flavor generated in the oxidization treatment contains volatile components, the oxidization treatment is preferred to do in a closed system. Actually, the oxidization treatment is done by using a reflux condenser in an example. It is described that the flavoring composition is particularly suitable in use for adding flavor to foods that are advantageously desired to have butter flavor.

US Patent No.3,689,289 discloses a method for the production of artificial chicken flavor by heat-reacting reducing sugar, amino acid and arachidonic acid or its methylester under particular conditions. Further, International Publication WO03/051139 pamphlet discloses a method for the production of artificial chicken flavor by heat-reacting reducing sugar, amino acid and arachidonic acid under particular conditions, wherein heat resistance and persistency of the artificial chicken flavor is obtained by using the arachidonic acid in a form of glycerin ester.
As a product obtained by heating three compounds of the sugar, amino acid and arachidonic acid will give the artificial chicken flavor in these methods, there is no description about enhancement of taste of foods by use of the long-chain highly unsaturated fatty acid such as arachidonic acid alone, or in a combination with the amino acid or sugar.
Japanese Patent Application laid open 2002-95439 discloses seasoning comprising glyceride of a long-chain highly unsaturated fatty acid, which enables one to take the long-chain highly unsaturated fatty acid together with a wide range of foods. The purpose of this invention is to increase oxidation stability of the long-chain highly unsaturated fatty acid that is susceptible to deterioration due to oxidation. Accordingly, it is characterized by adding the glyceride of the long-chain highly unsaturated fatty acid to processed foods prepared by fermentation of soybean or fish and shell, or to the seasoning composed mainly of tomato's components. Thus, there is no disclosure or teaching of oxidization treatment of the long-chain highly unsaturated fatty acid, or of the enhancement or provision of body taste of foods by the same acid per se.
[Patent document 1] Japanese Patent No.3220155
[Patent document 2] US Patent No.3,689,289
[Patent document 3] International Publication WO03/051139 pamphlet
[Patent document 4] Japanese Patent Application laid open 2002-95439

JP-A-2002 325558, JP-A-09 163957, and JP-A-05 068506 disclose the addition of a long-chain highly unsaturated fatty acid and/or an ester thereof to a seasoning to improve the taste of the seasoning or to provide the seasoning with body taste.

### Summary of the Invention

In the field of food, there are some kinds of foods that require "body taste" and "rich or thick taste", such as fried foods including pork cutlet, fat and oil containing foods including curry source and "gyo-za" (Chinese-style pork dumpling)." Conventionally, flavor has been added, or animal fat and oil have been used alone or in combinati on with vegetable fat and oil in order to give the above tastes to those foods.

However, there is a problem that the added flavor is volatilized during a heating treatment so that the given body taste can not be maintained. There is also a concern that cholesterol or saturated fatty acids contained in the animal fat and oil may adversely affect health. On the other hand, since the vegetable fat and oil contain a small amount of cholesterol or saturated fatty acids, there is a problem that foods cocked with the vegetable fat and oil would taste simple or plain, making the foods that need body taste unsatisfactory.

It is therefore desired to provide fat and oil being free of cholesterol and having a low content of saturated fatty acid, while having body taste.

A long-chain highly unsaturated fatty acid such as arachidonic acid and/or an ester thereof has been considered for a long time a causative agent of putrefactive smell of meat and the like and off-flavor. However, it was found that when foods are mixed with the long-chain highly unsaturated fatty acid and/or the ester thereof alone or are subjected to oxidization treatment such as heating with vegetable fat and oil comprising a predetermined amount of said long-chain highly unsaturated fatty acid and/or the ester thereof, the body taste of the foods will be enhanced and the original tastes of the foods will be increased (PCT/JP03/00182).

The present inventors has studied to overcome the above problem, and finally found that a long-chain highly unsaturated fatty acid and/or an ester thereof has various functions such as enhancing not only body taste but also taste and flavor of foods when added to the foods.

Thus, the present invention relates to a method for enhancing or making better taste or flavor of foods, comprising adding a long-chain highly unsaturated fatty acid and/or an ester thereof to the foods.

The phrase "enhancing or making better taste or flavor of foods" in the present specification means to newly provide a significant "body taste" and "rich or thick" with foods, to enhance them, and to inhibit unfavorable smell or odor that is peculiar to each food. The above advantages of the present invention may be evaluated by a sensory test.

There are listed below representative aspects of the method for enhancing or making better taste or flavor of foods, comprising adding a long-chain highly unsaturated fatty acid and/or an ester thereof to the foods.
That is, the present invention relates to the following.
[1] A method for enhancing body taste of fish and shell extract, animal meat extract, yeast extract, and vegetable extract prepared by extraction from onion, garlic or cabbage, comprising adding a long-chain highly unsaturated fatty acid and/or an ester thereof to the extract, wherein the long-chain highly unsaturated fatty acid is a fatty acid having 20 or more of carbon atoms and 3 or more of double bonds in the case of n-3 fatty acids, and a fatty acid having 18 or more of carbon atoms and 3 or more of double bonds in the case of n-6 fatty acids.
[2] A method for enhancing egg flavor of processed egg food, comprising adding a long-chain highly unsaturated fatty acid and/or an ester thereof to the processed egg food, wherein the long-chain highly unsaturated fatty acid is a fatty acid having 20 or more of carbon atoms and 3 or more of double bonds in the case of n-3 fatty acids, and a fatty acid having 18 or more of carbon atoms and 3 or more of double bonds in the case of n-6 fatty acids.
[3] A method for enhancing body taste and fried-egg flavor of fried rice, comprising adding a long-chain highly unsaturated fatty acid and/or an ester thereof to the fried rice, wherein the long-chain highly unsaturated fatty acid is a fatty acid having 20 or more of carbon atoms and 3 or more of double bonds in the case of n-3 fatty acids, and a fatty acid having 18 or more of carbon atoms and 3 or more of double bonds in the case of n-6 fatty acids.
[4] A method according to any one of [1] to [3] above, wherein the long-chain highly unsaturated fatty acid is arachidonic acid.
[5] A method according to any one of [1] to [3] above, wherein the long-chain highly unsaturated fatty acid is an n-3 long-chain highly unsaturated fatty acid, and is obtainable by oxidization treatment.
[6] A method according to any one of [1] to [5] above, wherein the long-chain highly unsaturated fatty acid is derived from microorganism.

The "long-chain highly unsaturated fatty acid" in the present specification means a fatty acid having 20 or more of carbon atoms and 3 or more of double bonds in the case of n-3 long-chain highly unsaturated fatty acids, and a fatty acid having 18 or more of carbon atoms and 3 or more of double bonds in the case of n-6 long-chain highly unsaturated fatty acids. A long-chain highly unsaturated fatty acid having 20-24 carbon atoms and 4-6 double bonds is preferred in both cases. Examples of the n-6 long-chain highly unsaturated fatty acids include γ-linolenic acid, arachidonic acid (AA) and docosatetraenoic acid (DTA), arachidonic acid being preferable. Examples of the n-3 long-chain highly unsaturated fatty acids include docosahexaenoic acid (DHA) and eicosapentaenoic acid (EPA).

There is no limitation on an origin of the long-chain highly unsaturated fatty acid such as arachidonic acid and its ester used in the present invention. Those skilled in the art may optionally use those derived from various animals and vegetables, microorganisms and algae that are commercially available.

For example, Japanese Patent Applications laid open Hei 10 (1998) -70992 and Hei 10 (1998) -191886 disclose edible fat and oil derived from bacteria, which comprises a lot of arachidonic acid in a form of triglyceride. The arachidonic acid may be therefore obtained form said edible fat and oil. γ-linolenic acid may be obtained from oil of borage, evening primrose, rose hip and Ribes Nigrum

It is also possible to mix and use together two or more kinds of the long-chain highly unsaturated fatty acids, or the long-chain highly unsaturated fatty acids that have different origins but belong to the same kind.

There is no limitation on structure and preparation of the ester of the long-chain highly unsaturated fatty acid, and monohydric and polyhydric alcohols may be used as alcohol that constitutes the above ester. Glycerol is one of the preferred examples of the polyhydric alcohols in view of safety and cost. The glycerol will constitute tri-glyceride, di-glyceride or mono-glyceride. Other fatty acids besides the long-chain highly unsaturated fatty acid may be contained as fatty acids that constitute the ester of the present invention.

In the method of the present invention, the long-chain highly unsaturated fatty acid and/or an ester thereof may be added as such or in a form of a preparation of the body taste enhancer comprising them in order to enhance or make better taste or flavor of foods.

There is no limitation on a content of the long-chain highly unsaturated fatty acid and its ester comprised in the body taste enhancer used in the present invention. However, if the content is too low, a more amount of in the body taste enhancer shall be needed, which may cause disadvantageous effects due to other components contained therein. The body taste enhancer used in the present invention comprises the long-chain highly unsaturated fatty acid and its ester preferably in an amount of 10 % by weight or more, more preferably 30 % by weight or more.

The body taste enhancer used in the present invention may additionally contains other optional components known to those skilled in the art, such as an emulsifier; tocopherols; sterols; phospholipids and other fatty acids; triglycerides, diglycerides and monoglycerides containing the other fatty acids.

It is desirable to subject the n-3 long-chain highly unsaturated fatty acid and/or the ester thereof to oxidization treatment in order to sufficiently effect the advantage. There is no limitation on a method for the oxidization treatment, which, for example, includes heating treatment. There is no limitation on a method for heating treatment, either. It is not necessary to carry out the oxidization treatment in the presence of an antioxidant, or in a closed system. The heating may therefore be normally carried out at 40°C ∼200°C for 0.1∼240 hours, preferably at 80°C ∼180°C for 0.5∼72 hours.

Although it is not necessary to subject the n-6 long-chain highly unsaturated fatty acid and/or the ester thereof to the oxidization treatment in order to effect its advantage, which shall be further increased by the oxidization treatment. The advantage may be obtained by subjecting the body taste enhancer comprising the long-chain highly unsaturated fatty acid and/or the ester thereof to the oxidization treatment such as heating.

The long-chain highly unsaturated fatty acid is more volatile than its ester, especially glycerine ester, even a less amount of said acid can effect the advantages of the present invention. On the other hand, as esters are relatively less volatile but persistently effective, they are comprised in the composition in a relatively larger amount.

Further when the long-chain highly unsaturated fatty acid such as arachidonic acid and/or the ester thereof derived from the microorganism is used, it will be possible to obtain the body taste enhancer or foods having substantially no fat and oil derived from animal and a low content of saturated fatty acid and being free of cholesterol.

There is no limitation on an amount or timing with respect to the addition of the long-chain highly unsaturated fatty acid and/or its ester. IT may be added in an appropriate amount at an appropriate time depending on a kind and way of cooking of the foods. If the foods are heated after the long-chain highly unsaturated fatty acid and/or its ester is added to them, the advantages of the present invention may be more significantly obtained.

By adding the long-chain highly unsaturated fatty acid and/or the ester thereof to the foods, it will be possible to enhance or make better taste or flavor of the foods. Coexistence of reducing sugar or amino acid is not necessary to obtain the advantages of the present invention.

### Best Mode for Carrying Out the Invention

The applications of the method of the present invention will be described below more in detail referring to the representative foods.

### (1) Seasoning (not belonging to the scope of the present invention)

The addition of the long-chain highly unsaturated fatty acid and/or the ester thereof to seasoning obtained by mixing one or more of salt, saccharides such as sugar, organic acids such as vinegar, MSG (monosodium glutamate), IN (sodium 5'-inosinate), soy sauce, soybean paste, and proteinous hydrolyate with acid or enzyme will make taste of the seasoning better, and/or will provide it with body taste. There is no specific limitation on a form of the seasoning, including powder, paste, liquid and the like. Powdered fat and oil may be mixed with the seasoning. The powdered fat and oil may be supplemented with various known auxiliaries such as a thickening agent, or be emulsified with an emulsifier. Powdering may be done by any method known to those skilled in the art such as spray-dry or freeze-dry. The thus prepared seasoning may be added to foods so as to enhance their body taste.

### (2) Extract(s)

The addition of the long-chain highly unsaturated fatty acid and/or the ester thereof to extract will enhance body taste of the extract, or will provide it with freshly-prepared (or boiled) flavor and taste. The extract includes fish and shell extract prepared by extraction from seafood such as skipjack tuna, chub mackerel, scallop, oyster, and kelp; animal meat extract prepared by extraction from animal meat such as pork, chicken and beef, and bone, a part of bone and the like of animals; yeast extract extracted from yeast; and vegetable extract prepared by extraction from various vegetables such as onion, garlic, and cabbage. There is no limitation on a concentration of the extract when the long-chain highly unsaturated fatty acid and/or the ester thereof is added to them. There is no limitation on a form of the extract, including power and paste and the like. As already mentioned, there is no need of addition of the reducing sugar or amino acid to the extract to be mixed with the long-chain highly unsaturated fatty acid and/or the ester thereof in order to show the body taste enhancing effect. The long-chain highly unsaturated fatty acid and/or the ester thereof may be added at any step during a production process of the extract.

Although the long-chain highly unsaturated fatty acid and/or the ester thereof may show its advantages even if it is added after heating of the extract, it may show more effectively its advantages if it is heated after being mixed with the extract. The fat and oil may be removed by filtration and the like after the long-chain highly unsaturated fatty acid and/or the ester thereof is mixed and heated with the extract. The mixture of the long-chain highly unsaturated fatty acid and/or the ester thereof and the extract may be heated at 50°C ∼130°C, preferably at 80°C ∼100°C for 10 min∼6 hours, preferably for 1-3 hours. The long-chain highly unsaturated fatty acid and/or the ester thereof may be added to the extract usually in an amount of 1-50,000 ppm, preferably of 10-10,000 ppm as of the long-chain highly unsaturated fatty acid. The advantages of the present invention may be obtained even if the extract is subjected to other treatments such as disintegration and drying after being mixed with the long-chain highly unsaturated fatty acid and/or the ester thereof.

The taste of foods such as curry and soup may be made better, or the foods will be provided with the body taste, by adding to the foods seasoning prepared by mixing the extract with one or more of salt, saccharides such as sugar, organic acids such as vinegar, MSG (monosodium glutamate), IN (sodium 5'-inosinate), soy sauce, soybean paste, and proteinous hydrolyte with acid or enzyme. There is no limitation on a form of the seasoning, including powder, paste, liquid and the like. Powdered fat and oil may be mixed with the seasoning. The powdered fat and oil may be supplemented with various known auxiliaries such as the thickening agent, or be emulsified with the emulsifier. Powdering may be done by any method known to those skilled in the art such as spray-dry or freeze-dry. The thus prepared seasoning may be added to foods so as to enhance their body taste.

### (3) Processed egg food

The addition of the long-chain highly unsaturated fatty acid and/or the ester thereof to the processed egg food will enhance its egg flavor. For example, it may provide commercial products such as freeze-dry egg soup with such an excellent egg flavor as it is felt just after a normal cooking. The egg flavor of mayonnaise may be also enhanced. Especially, provision of body taste and enhancement of egg flavor may be realized in low calorie-type mayonnaise with a reduced amount of fat and oil, which has disadvantage of being inferior to normal one in body taste and egg flavor, by adding thereto the long-chain highly unsaturated fatty acid and/or the ester thereof. The long-chain highly unsaturated fatty acid and/or the ester thereof may be added to the freeze-dry egg soup at an eating time usually in an amount of 1 ∼ 1,000 ppm, preferably of 10 -1,000 ppm as of the long-chain highly unsaturated fatty acid. It may be added to mayonnaise usually in an amount of 10 ∼ 1,000 ppm, preferably of 20 ∼ 400 ppm.

### (4) Soup (not belonging to the scope of the present invention)

The body taste of liquid foods such as soup will be enhanced by the addition of the long-chain highly unsaturated fatty acid and/or the ester thereof at an eating time preferably in an amount of 1 ∼ 2,000 ppm, more preferably of 1 ∼1,000 ppm as of the long-chain highly unsaturated fatty acid.

### (5) Curry roux or stew (not belonging to the scope of the present invention)

The curry roux or stew will be provided with body taste by the addition of the long-chain highly unsaturated fatty acid and/or the ester thereof, which may be mixed with vegetable fat and oil to adjust the curry roux, at an eating time preferably in an amount of 10 ∼ 2,000 ppm, more preferably of 50 ∼1,000 ppm as of the long-chain highly unsaturated fatty acid. The long-chain highly unsaturated fatty acid and/or the ester thereof may be also used in the curry roux in a form of seasoning.

### (6) Japanese soup or its stock (not belonging to the scope of the present invention)

The addition of the long-chain highly unsaturated fatty acid and/or the ester thereof will inhibit the heat-browning odor of Japanese soup or its stock or will provide it with Japanese soup flavor. Although the long-chain highly unsaturated fatty acid and/or the ester thereof may be added to a final product of Japanese soup, it will show more effectively its advantages by being mixed with the stock of Japanese soup and/or soy sauce during the production processes of the soup. Even after removal of the long-chain highly unsaturated fatty acid and/or the ester thereof once it was mixed with the Japanese soup and heated, its effects will be maintained. The concentration of the long-chain highly unsaturated fatty acid and/or the ester thereof, at an eating time is usually 0.1 ∼ 500 ppm, preferably 0.1 ∼100 ppm as of the long-chain highly unsaturated fatty acid.

### (7) Processed animal meat foods (not belonging to the scope of the present invention)

The addition of the long-chain highly unsaturated fatty acid and/or the ester thereof will enhance the body taste of dry foods such as burger, meat ball, Chinese-style pork dumplings, steamed Chinese-style pork dumplings, ham and sausage preferably in amount of 20 ∼ 2,500 ppm, more preferably of 20 ∼1,000 ppm. The addition of the long-chain highly unsaturated fatty acid and/or the ester thereof will inhibit odor derived from vegetable protein and enhance the taste and flavor of the foods utilizing vegetable protein.

### (8) Fried rice

The use of the long-chain highly unsaturated fatty acid and/or the ester thereof in frying oil will provide the fried rice with body taste and enhance its egg flavor preferably in amount of 2 ∼ 5,000 ppm, more preferably of 10 ∼1,000 ppm as of the long-chain highly unsaturated fatty acid. The long-chain highly unsaturated fatty acid and/or the ester thereof may be added to frying oil at any stage of cooking, being preferably admixed with the oil though.

### (9) Vegetable protein (not belonging to the scope of the present invention)

The addition of the long-chain highly unsaturated fatty acid and/or the ester thereof to processed foods using vegetable protein, especially granulated soybean protein will mask "top smell" peculiar to the vegetable protein and enhance the taste of the processed foods. The processed foods include burger, meatball, Chinese-style pork dumplings, steamed Chinese-style pork dumplings, ham and sausage, which utilize the soybean protein. In order to show the masking effect of the long-chain highly unsaturated fatty acid and/or the ester thereof, it may be appropriately present in the foods in an amount of 1 ∼ 2,500 ppm, preferably of 1 ∼500 ppm, more preferably of 1 ∼100 ppm as of the long-chain highly unsaturated fatty acid.

### (10) Fat and oil for oil cooking and flavoring (not belonging to the scope of the present invention)

Fat and oil for oil cooking and flavoring may be easily prepared by any suitable methods such as adding or mixing the long-chain highly unsaturated fatty acid and/or the ester thereof to or with vegetable fat and oil.

Any vegetable fat and oil known to those skilled in the art may be used in the present invention, including soybean oil, rape-seed oil, com oil, sunflower oil, safflower oil, rice oil, sesame oil, olive oil and palm oil. Among them, the advantages of the present invention will be effectively obtained by adding the body taste enhancer to soybean oil, rape-seed oil, com oil and palm oil, which are mainly used for heat-cooking such as frying and stir-fry.

Furthermore, if the vegetable fat and oil contains an isolated trans-isomer in an amount of 10 - 85 %, especially of 20 - 60 %, the advantages of the present invention will be more increased. A content of the isolated trans-isomer expressed as "%" is obtained according to Standard Methods for the Analysis of Fats, Oils and Related Materials by measuring infrared spectrum of methyl ester of a sample fatty acid and determining a percentage of the amount of methyl ester of elaidic acid against the sample. The vegetable fat and oil containing such isolated trans-isomer may be prepared by any method known to those skilled in the art. For example, it may be prepared by optionally hydrogenating material vegetable fat and oil by any method known to those skilled in the art. The resulting hydrogenated oil may be mixed with non-hydrogenated one.

The phrase "isolated trans-isomer" in the present specification means an unsaturated fatty acid having an isolated double bond in a trans-form (single double bond or non-conjugated double bond), its content is determined by Standard Methods for the Analysis of Fats, Oils and Related Materials 2.4.4.2-1996.

In order to obtain the fat and oil composition for oil cooking such as deep- frying or frying, a content of the long-chain highly unsaturated fatty acid in the vegetable fat and oil composition should be usually10 - 100,000 ppm, preferably 10 - 10,000 ppm, more preferably 10 - 8,000 ppm, much more preferably 10 - 3,000 ppm, most preferably 20 - 1,000 ppm. Thus, it is important that the vegetable fat and oil composition should have a particular range of the content of the long-chain highly unsaturated fatty acid and/or the ester thereof.

The thus obtained vegetable fat and oil composition may be used in various heat-cooking methods such as deep-frying and frying, for example, heating preferably at 80°C ∼300°C, and more preferably at 110°C ∼300°C. The heating treatment at such temperature range will enhance body taste and increase the original tastes of the foods cooked with the vegetable fat and oil composition.

The fat and oil composition made of the long-chain highly unsaturated fatty acid and/or the ester thereof and vegetable oil may be used as a starting material for oil for seasoning and flavoring having body taste in a usual production process. For example, the oil for seasoning and flavoring may be prepared by mixing the long-chain highly unsaturated fatty acid and/or the ester thereof with one or more of vegetables such as green onion, ginger, garlic, and onion; fish and shells; animal meat; amino acids such as sodium glutamate, followed by heating. It may alternatively be prepared by mixing the fat and oil composition made of the long-chain highly unsaturated fatty acid and/or the ester thereof and vegetable oil with animal meat flavor such as pork, beef and chicken, or butter flavor. The content of the long-chain highly unsaturated fatty acid and/or the ester thereof is usually 0.01∼10 %, preferably 0.05∼5 % in the vegetable fat and oil composition in order to effectively obtain the advantages of the present invention.

The present invention will be explained in more detail with reference to the following examples. The term "%" in the following examples mean "% by weight" unless otherwise noted

### Long-chain highly unsaturated fatty acid used in the Examples:

Arachidonic acid (AA): 98% purity, distributed by Wako Chemicals Ltd. and manufactured by ICN;
AA-containing triglyceride (AATG): AA content of 40-45 %, distributed by Nakarai Tesk Ltd. and manufactured by Suntory Ltd;
Borage oil :γ-Linolenic acid content of 20%, manufactured by Statfold Co.; γ-Linolenic acid: 99% purity, manufactured by SIGMA Co.;
DHA27G : DHA content of 27%, manufactured by NIPPON CHEMICAL FEED CO., LTD.;
DHA: 98% purity, manufactured by SIGMA Co.;
Pure light oil (PL oil): low α-linolenic acid-containing rape seed oil, manufactured by Ajinomoto Co., Inc.

### Sensory test:

In the sensor test, the advantages of the present invention to enhance or make better flavor or taste of the food refer to the increase at least one of "strength of aroma", "strength of flavor", "strength of taste" and "strength of aftertaste" without any deterioration of corresponding "goodness of aroma", "goodness of flavor", "goodness of taste" and "goodness of aftertaste", respectively. Further, the sensor test is also based on the "effects of inhibiting heat-browning odor" and "strength of flavor of Japanese soup's stock " in Example 10, and on the "strength of soybean proteinous odor" in Example 12. In the sensory test of animal meat extract, aroma is evaluated with a top note of solution, and the flavor is evaluated based on smell or odor that panelists will feel through their nose when they put the solution into their mouth. The strength and goodness of aroma and flavor are evaluated based on good animal smell peculiar to the animal meat extract and on mellow aroma and flavor of the fat and oil.
Panelists: n=7
The symbols used in the following Tables showing the test results means as follows:
"X": weaker or worse than control;
"Δ": the same degree as control;
"O": stronger or better than control;
"⊚: much stronger or much better than control.

### Example 1

Pork extract A-4191 (Ariake Japan Co., Ltd.) was diluted with water or hot water to a concentration of 2 %. AATG was added to the solution at a concentration of 0.001% ∼ 0.05% and heated at 95°C∼100°C for 2 hours. The sensory test was done in taking the pork flavor and the body taste of oil into account. Non-added extract was used as a control.

**[TABLE 1]**

| Evaluation Item | Cont. | 0.001 % | 0.002 % | 0.005 % | 0.01% | 0.02% | 0.05% |
|---|---|---|---|---|---|---|---|
| Strength of aroma | - | Δ | ○ | ⊚ | ⊚ | ⊚ | ⊚ |
| Goodness of aroma | - | Δ | ⊚ | ⊚ | ○ | Δ | X |
| Strength of flavor | - | Δ | ○ | ⊚ | ⊚ | ⊚ | ⊚ |
| Goodness of flavor | - | Δ | ⊚ | ⊚ | ○ | Δ | X |
| Strength of taste | - | Δ | ○ | ○ | ○ | ○ | ○ |
| Goodness of taste | - | Δ | ⊚ | ⊚ | ○ | Δ | X |
| Strength of aftertaste | - | Δ | ○ | ○ | ○ | ○ | ○ |
| Goodness of aftertaste | - | Δ | ⊚ | ⊚ | ○ | Δ | X |

### Example 2

Pork extract A-4191 (Ariake Japan Co., Ltd.) was diluted with water or hot water to a concentration of 2 %. AATG was added to the solution at a concentration of 0.005% and heated at 95°C∼100°C for 1-4 hours. The sensory test was done in taking the pork flavor and the body taste of oil into account. Non-heated extract was used as a control.

**[TABLE 2]**

| Evaluation Item | Cont. | 1h | 2h | 3h | 4h |
|---|---|---|---|---|---|
| Strength of aroma | - | Δ | ⊚ | ⊚ | ⊚ |
| Goodness of aroma | - | ○ | ⊚ | ⊚ | ○ |
| Strength of flavor | - | Δ | ⊚ | ⊚ | ⊚ |
| Goodness of flavor | - | ○ | ⊚ | ⊚ | ○ |
| Strength of taste | - | Δ | ○ | ○ | ○ |
| Goodness of taste | - | ○ | ⊚ | ⊚ | ○ |
| Strength of aftertaste | - | Δ | ○ | ○ | ○ |
| Goodness of aftertaste | - | ○ | ⊚ | ⊚ | ○ |

### Example 3

Pork extract powder 2151C (Semba Co., Ltd.) was diluted with water or hot water to a concentration of 40 %. AATG was added to the solution at a concentration of 2% and heated at 95°C∼100°C for 2 hours to give "AA pork extract." One pack of powder soup enclosed with ("Sapporo Ichiban Buta Tonkatsu" manufactured by Sanyo Foods Co. Ltd.) was diluted with hot water (500 g), mixed with AA pork extract of a concentration of 0.01∼0.07% and used in the test. Non-heated extract (0.07%) was used as a control. The effect of the AA pork extract and taste of soup prepared with the extract were observed.

**[TABLE 3]**

| Evaluation Item | Cont. | 0.01% | 0.025% | 0.05% | 0.07% |
|---|---|---|---|---|---|
| Strength of aroma | - | ○ | ⊚ | ⊚ | ⊚ |
| Goodness of aroma | - | ○ | ⊚ | ⊚ | ○ |
| Strength of flavor | - | ○ | ⊚ | ⊚ | ⊚ |
| Goodness of flavor | - | ○ | ⊚ | ⊚ | ○ |
| Strength of taste | - | ○ | ○ | ⊚ | ○ |
| Goodness of taste | - | ○ | ⊚ | ⊚ | ○ |
| Strength of aftertaste | - | ○ | ○ | ⊚ | ○ |
| Goodness of aftertaste | - | ○ | ⊚ | ⊚ | ○ |

### Example 4

Chicken extract 3943 (IDF was diluted with water or hot water to a concentration of 2 %. AATG was added to the solution at a concentration of 0.001∼0.05% and heated at 95°C∼100°C for 2 hours. The sensory test was done in taking the chicken flavor and the body taste of oil into account. Non-added extract was used as a control.

**[TABLE 4]**

| Evaluation Item | Cont. | 0.001 % | 0.002 % | 0.005 % | 0.01% | 0.02% | 0.05% |
|---|---|---|---|---|---|---|---|
| Strength of aroma | - | ○ | ○ | ⊚ | ⊚ | ⊚ | ⊚ |
| Goodness of aroma | - | ○ | ⊚ | ⊚ | ○ | Δ | X |
| Strength of flavor | - | ○ | ○ | ⊚ | ⊚ | ⊚ | ⊚ |
| Goodness of flavor | - | ○ | ⊚ | ⊚ | ○ | Δ | X |
| Strength of taste | - | ○ | ○ | ○ | ○ | ○ | ○ |
| Goodness of taste | - | ○ | ⊚ | ⊚ | ○ | Δ | X |
| Strength of aftertaste | - | ○ | ○ | ○ | ○ | ○ | ○ |
| Goodness of aftertaste | - | ○ | ⊚ | ⊚ | ○ | Δ | X |

### Example 5

Chicken extract 3943 (IDF) was diluted with water or hot water to a concentration of 2 %. AATG was added to the solution at a concentration of 0.05% and heated at 95°C∼100°C for 1-4 hours. The sensory test was done in taking the chicken flavor and the body taste of oil into account. Non-heated extract was used as a control.

**[TABLE 5]**

| Evaluation Item | Cont. | 1h | 2h | 3h | 4h |
|---|---|---|---|---|---|
| Strength of aroma | - | ○ | ⊚ | ⊚ | ⊚ |
| Goodness of aroma | - | ○ | ⊚ | ○ | Δ |
| Strength of flavor | - | ○ | ⊚ | ⊚ | ⊚ |
| Goodness of flavor | - | ○ | ⊚ | ○ | Δ |
| Strength of taste | - | ○ | ○ | ○ | ○ |
| Goodness of taste | - | ○ | ⊚ | ⊚ | ○ |
| Strength of aftertaste | - | ○ | ○ | ○ | ○ |
| Goodness of aftertaste | - | ○ | ⊚ | ⊚ | ○ |

### Example 6

Yeast extract (Gistex XII) was diluted with water or hot water to a concentration of 2 %. AATG was added to the solution at a concentration of 0.001∼0.05%. Non-added extract was used as a control.

**[TABLE 6]**

| Evaluation Item | Cont. | 0.001 % | 0.002 % | 0.005 % | 0.01% | 0.02% | 0.05% |
|---|---|---|---|---|---|---|---|
| Strength of aroma | - | ○ | ○ | ⊚ | ⊚ | ○ | ⊚ |
| Goodness of aroma | - | ○ | ⊚ | ⊚ | ○ | Δ | X |
| Strength of flavor | - | ○ | ○ | ⊚ | ⊚ | ⊚ | ⊚ |
| Goodness of flavor | - | ○ | ⊚ | ⊚ | ○ | Δ | X |
| Strength of taste | - | ○ | ○ | ○ | ⊚ | ○ | ○ |
| Goodness of taste | - | ○ | ⊚ | ⊚ | ○ | Δ | X |
| Strength of aftertaste | - | ○ | ○ | ⊚ | ⊚ | ○ | ○ |
| Goodness of aftertaste | - | ○ | ⊚ | ⊚ | ○ | Δ | X |

### Example 7

One piece of freeze-dry egg soup (Knorr Foods Co. Ltd.) was mixed with hot water (160 g). The solution was then mixed with AATG to a concentration of 0.005 %, or with borage oil to a concentration of 0.05 %, heated at 95 °C∼100°C for 1 hour. The sensory test was done in taking the aroma and flavor of egg into account. Non-added soup was used as a control.

**[TABLE 7]**

| Evaluation Item | Cont. | Addition of AATG | Addition of Borage oil |
|---|---|---|---|
| Strength of egg aroma | - | ○ | ○ |
| Goodness of egg aroma | - | ○ | ○ |
| Strength of egg flavor | - | ○ | ○ |
| Goodness of egg flavor | - | ○ | ○ |
| Strength of total taste | - | ⊚ | ○ |
| Goodness of total taste | - | ○ | ○ |
| Strength of aftertaste | - | ⊚ | ○ |
| Goodness of aftertaste | - | ○ | ○ |

### Example 8 (Reference only)

One pack (17 g) of thick soup (Knorr Cup Soup: Ajinomoto Co. Inc.) was mixed with borage oil (0.5-2.5 g) and then with hot water (150 ml), which was subjected to the sensory test. When the amount of γ-linolenic acid added to the soup is over 3,000 ppm, the aroma will be too strong and not favorable

**[TABLE 8]**

| | | | | |
|---|---|---|---|---|
| Addition of borage oil (g) | 0 | 0.5 | 1.5 | 2.5 |
| Concentration of γ-linolenic acid (ppm) at an eating time | - | 600 | 800 | 3,000 |
| Strength of aroma | - | ○ | ⊚ | ⊚ |
| Goodness of aroma | - | ⊚ | ⊚ | X |
| Strength of flavor | - | ○ | ⊚ | ⊚ |
| Goodness of flavor | - | ⊚ | ⊚ | X |
| Strength of taste | - | ○ | ○ | ⊚ |
| Goodness of taste | - | ⊚ | ⊚ | ○ |
| Strength of aftertaste | - | ○ | ○ | ⊚ |
| Goodness of aftertaste | - | ⊚ | ⊚ | ○ |

### Example 9 (Reference only)

AATG was added to salad oil manufactured by Ajinomoto Co. Inc. to a final concentration of 1 %, respectively, and a part of which was then heated at 200°C for 5 min. The resulting oil composition was added to mayonnaise manufactured by Ajinomoto Co. Inc. ("Pure Select Half") to a final concentration of 1%. The sensory test was done in taking the aroma and flavor of egg into account. Non-added product was used as a control.

**[TABLE 9]**

| Evacuation Item | Cont. | Addition of AATG | Addition of AATG with heating |
|---|---|---|---|
| Strength of egg aroma | - | ○ | ○ |
| Goodness of egg aroma | - | ○ | ○ |
| Strength of egg flavor | - | ○ | ○ |
| Goodness of egg flavor | - | ○ | ○ |
| Strength of total taste | - | ○ | ⊚ |
| Goodness of total taste | - | ○ | ○ |
| Strength of aftertaste | - | ○ | ⊚ |
| Goodness of aftertaste | - | ○ | ○ |

### Example 10 (Reference only)

Noodle soup composition was prepared having formulation of TABLE 10. The long-chain highly unsaturated fatty acid (AATG or DHA27G) and/or the ester thereof was added to the thus obtained concentrate-type noodle soup to a final concentration of 0.0001∼0.05% and heated at 90°C for 30 min. After heating, fat and oil fraction was removed by filtration and the resulting filtrate was diluted three times for evaluation.

**[TABLE 10]**

| Materials | Formulation (g) | Formulation Ratio (%) |
|---|---|---|
| Strong soy sauce (KIKKOMAN Co.) | 150 | 50.0 |
| Sugar | 27 | 9.0 |
| Liquid sugar (SANFURAKUTO Co.) | 27 | 9.0 |
| Salt | 6 | 2.0 |
| Soup extracted from bonito | 90 | 30.0 |
| Total | 300 | 100 |

**[TABLE 11]**

| | No addition | AA | AATG | AATG | AATG | AATG |
|---|---|---|---|---|---|---|
| Added Amount (ppm) | 0 | 0.0003 % | 0.0001 % | 0.005 % | 0.05% | 0.5% |
| Conc. at an eating time | - | 1 | 0.12 | 6.7 | 67 | 670 |
| Strength of aroma | - | ○ | ○ | ○ | ⊚ | ⊚ |
| Goodness of aroma | - | ○ | ○ | ⊚ | ○ | X |
| Strength of flavor | - | ○ | ○ | ○ | ⊚ | ⊚ |
| Goodness of flavor | - | ○ | ○ | ⊚ | ○ | X |
| Strength of taste | - | ○ | ○ | ○ | ○ | ⊚ |
| Goodness of taste | - | ○ | ○ | ⊚ | ○ | X |
| Inhibiting effect of heat-browning odor | - | ⊚ | ○ | ⊚ | ⊚ | ⊚ |
| Strength of Japanese soup flavor | - | ⊚ | ○ | ⊚ | ⊚ | ⊚ |

**[TABLE 12]**

| | No addition | DHA | DHA2 7 | DHA2 7 | DHA2 7 |
|---|---|---|---|---|---|
| Added Amount | 0 | 0.0003 % | 0.0005 % | 0.005 % | 0.05% |
| Conc. at an eating time (ppm) | - | 1 | 0.5 | 5 | 50 |
| Strength of aroma | - | ○ | ○ | ○ | ○ |
| Goodness of aroma | - | ○ | ○ | ○ | ⊚ |
| Strength of flavor | - | ○ | ○ | ○ | ○ |
| Goodness of flavor | - | ○ | ○ | ○ | ⊚ |
| Strength of taste | - | ○ | ○ | ○ | ○ |
| Goodness of taste | - | ○ | ○ | ○ | ⊚ |
| Inhibiting effect of heat-browning odor | - | ⊚ | ○ | ⊚ | ⊚ |
| Strength of Japanese soup flavor | - | ⊚ | ○ | ⊚ | ⊚ |

The results in TABLEs 11 and 12 confirmed that the addition of the long-chain highly unsaturated fatty acid and/or the ester thereof would provide the noodle soup with the body taste and Japanese soup flavor, and prohibit the heat-browning odor.

### Example 11 (Reference only)

Strong soy sauce (KIKKOMAN Co.) was diluted with hot water to a concentration of 2 %. AATG was added to the solution at a concentration of 0.001∼0.05%. Non-added extract was used as a control.

**[TABLE 13]**

| Evaluation Item | Cont. | 0.001 % | 0.002 % | 0.005 % | 0.01% | 0.02% | 0.05% |
|---|---|---|---|---|---|---|---|
| Strength of aroma | - | ○ | ○ | ⊚ | ⊚ | ⊚ | ⊚ |
| Goodness of aroma | - | ○ | ⊚ | ⊚ | ○ | Δ | X |
| Strength of flavor | - | ○ | ○ | ⊚ | ⊚ | ⊚ | ⊚ |
| Goodness of flavor | - | ○ | ⊚ | ⊚ | ○ | Δ | X |
| Strength of taste | - | ○ | ⊚ | ⊚ | ○ | ○ | ○ |
| Goodness of taste | - | ○ | ⊚ | ⊚ | ○ | Δ | X |
| Strength of aftertaste | - | ○ | ○ | ○ | ○ | ○ | ○ |
| Goodness of aftertaste | - | ○ | ⊚ | ⊚ | ○ | Δ | X |

### Example 12 (Reference only)

Burger was prepared by using the following preparation oil.
(1) AATG (AA content of 40%)
(2) 10% AATG/PL oil (AA content of 4%)
(3) 10% DHA27G/PL oil (DHA content of 2.7%)

The formulation of the TABLE 14 was mixed by a hobart mixer, divided into a piece of 160 g each, mixed with each preparation oil, shaped into a piece of 30 g each and baked on a hot plate.

Baking conditions: temperature of a hot plate of 200°C, 5 min. for each face x 2 (10 min. in total)

**[TABLE 14]**

| | Formulation (g) | Formulation ratio (%) |
|---|---|---|
| Minced low-fat pork | 400 | 39 |
| Lard | 50 | 5 |
| Starch | 10 | 1 |
| Bread crumb | 70 | 7 |
| Onion | 160 | 16 |
| Salt | 5 | 0.5 |
| Sugar | 10 | 1 |
| Soy sauce | 10 | 1 |
| White pepper | 1 | 0.1 |
| Egg white | 50 | 5 |
| Granutaled soybean protein | 40 | 4 |
| Water | 210 | 21 |
| Total | 1016 | 100 |

**[TABLE 15]**

| Preparation oil added | PL oil (cont.) | (2) | (1) | (3) | (1) | (1) | (1) |
|---|---|---|---|---|---|---|---|
| Amount of Addition (g) | 0.2 | 0.2 | 0.2 | □0.3 | 0.5 | 1 | 2 |
| Conc. (ppm) of highly unsaturated fatty acid at an eating time | 0 | 50 | 500 | 34 | 1250 | 2500 | 5000 |
| Strength of aroma | - | ○ | ⊚ | ○ | ⊚ | ⊚ | ⊚ |
| Goodness of aroma | - | ○ | ⊚ | ○ | ○ | ○ | X |
| Strength of flavor | - | ○ | ⊚ | ○ | ⊚ | ⊚ | ⊚ |
| Goodness of flavor | - | ○ | ⊚ | ○ | ○ | ○ | X |
| Strength of taste | - | ○ | ⊚ | ○ | ⊚ | ⊚ | ⊚ |
| Goodness of taste | - | ○ | ⊚ | ○ | ○ | ○ | X |
| Strength of soybean protein smell | - | X | X | X | X | X | X |

In the above TABLE, "X" in the column "Strength of soybean protein smell" means that the soybean protein smell is weaker than that of the control or not felt.

The results in TABLE 15 demonstrated that the addition of the highly unsaturated fatty acid in an amount of 50 ∼ 2,500 ppm followed by heating would provide the burger with the good body taste, without causing any soybean protein smell. On the other hand, over-addition of the same acid would cause unpleasant flavor.

### Example 13 (Reference only)

### < Sausage >

Wiener sausage was prepared according to a standard method by adding 10% AATG/PI oil (AA content of 4%) to a final concentration of 2∼0.1 %, or AATG to a final concentration of 1.0% to the following base composition, and subjected to the sensory test.

### Formulation ratio:

Minced pork red meat: 45
Pork back oil: 23
Water with ice: 24
Powdered soybean protein fraction ("AJIPURON SU" Ajinomoto Co. Inc.): 3
Casein sodium: 1
Salt: 1.5
Sugar: 1.5
"Polygon M" (phosphate salt formulation manufactured by Chiyoda Chemical Co. Ltd.,): 0.3
Nitrite Sodium: 0.02
Ascorbic acid sodium: 0.08
White pepper: 0.2
Nutmeg seed: 0.2
Cilantro leaf: 0.1
AA-containing oil: 2.0

### Preparation method:

Materials were cut and mixed well with a food cutter, packed into sheep sausage, and dried, smoked and boiled well in a small smoke house, followed by cooling. The sensory test was carried out on the next day.

**[TABLE 16]**

| | | 10% AATG | 10% AATG | 10% AATG 27 | 10% AATG | AATG |
|---|---|---|---|---|---|---|
| | No addition | 0.1 % | 0.5 % | 1.0 % | 2.0 % | 1.0 % |
| AA Concentration (ppm) | - | 40 | 200 | 400 | 800 | 4000 |
| Strength of aroma | - | Δ | ○ | ⊚ | ⊚ | ⊚ |
| Goodness of aroma | - | Δ | ⊚ | ⊚ | ○ | X |
| Strength of flavor | - | Δ | ○ | ⊚ | ⊚ | ⊚ |
| Goodness of flavor | - | Δ | ⊚ | ⊚ | ○ | X |
| Strength of taste | - | Δ | ○ | ○ | ○ | ⊚ |
| Goodness of taste | - | Δ | ⊚ | ⊚ | ○ | X |
| Strength of aftertaste | - | Δ | ○ | ○ | ○ | ⊚ |
| Goodness of aftertaste | - | Δ | ⊚ | ⊚ | ○ | X |
| Strength of soybean protein smell | | X | X | X | X | X |

### Example 14 (Reference only)

### <Curry roux>

AATG of 0.02∼10.0g or borage oil of 5g was added to PL oil to a final volume of 15g. The resulting oil was mixed with soft flour (15g), heated at 120°C for 30 min., then mixed with 3g of curry powder ("Tokusei SB Curry" manufactured by S & B Food Inc.), and heated again at 120°C for 10 min. to give curry roux. Consomme soup (Consomme" manufacture by Ajinomoto Co. Inc., 1.7 % solution) of 500 ml was added and heated. The curry roux was diluted with the consomme soup to give curry soup.

**[TABLE 17]**

| | AATG | AATG | AATG | AATG | AATG | Borage |
|---|---|---|---|---|---|---|
| Added Amount (g) | 0 | 0.02 | 0.1 | 1.0 | 10.0 | 5.0 |
| Conc. at an eating time (ppm) | 0 | 15 | 75 | 750 | 7500 | 1875 |
| Strength of aroma | - | ○ | ⊚ | ⊚ | ⊚ | ○ |
| Goodness of aroma | - | ○ | ⊚ | ⊚ | X | ⊚ |
| Strength of flavor | - | ○ | ○ | ⊚ | ⊚ | ○ |
| Goodness of flavor | - | ○ | ⊚ | ⊚ | X | ⊚ |
| Strength of taste | - | ○ | ○ | ⊚ | ⊚ | ○ |
| Goodness of taste | - | ○ | ⊚ | ⊚ | ○ | ⊚ |

It was confirmed that the curry roux with the body taste was cooked by using fat and oil containing the long-chain highly unsaturated fatty acid and/or the ester thereof.

### Example 15 (Reference only)

### <Pork cutlet>

Pork cutlet was deep-fried in vegetable fat and oil preparations comprising the following long-chain highly unsaturated fatty acid and/or the ester thereof.
(1) PL oil
(2) 0.13% AATG/PL oil (AA content of 500 ppm)
(3) 1.25% AATG/PL oil (AA content of 5000 ppm)
(4) 3% AATG/PL oil (AA content of 12,000 ppm)
(5) 5% borage oil/PL oil (γ-linolenic acid content of 10,000 ppm)

Cutlet was prepared by seasoning pork loin (75g) with salt (0.6g) and a small amount of pepper, coating it with wheat flour, 20% egg solution and bread crumb, followed by deep-frying at 180°C for 30 min. in the above vegetable fat and oil preparations.

**[TABLE 18]**

| | (1) | (2) | (3) | (4) | (5) |
|---|---|---|---|---|---|
| Conc. In oil (ppm) | 0 | 500 | 5000 | 12000 | 10000 |
| Strength of aroma | - | ⊚ | ⊚ | ⊚ | ⊚ |
| Goodness of aroma | - | ⊚ | ⊚ | X | ⊚ |
| Strength of flavor | - | ⊚ | ⊚ | ⊚ | ⊚ |
| Goodness of flavor | - | ⊚ | ⊚ | X | ⊚ |
| Strength of taste | - | ⊚ | ⊚ | ⊚ | ⊚ |
| Goodness of taste | - | ⊚ | ⊚ | X | ⊚ |

It was confirmed that the cutlet with the body taste was cooked by frying them in the fat and oil composition containing the long-chain highly unsaturated fatty acid and/or the ester thereof. Over-addition of the long-chain highly unsaturated fatty acid and/or the ester thereof would deteriorate the taste.

### Example 16

### < Fried rice>

Beaten egg (100g), rice (500g) and other ingredients (green onion, char siu, etc.) was fried in sequence in a pan coated on its surface with Ajinomoto salad oil (25g) containing AATG (1%) or borage oil (3%), and finally seasoned with salt, pepper and MSG. Fried rice cooked by using only salad oil was considered as a control. The sensory test was carried out in view of the flavor of fried egg and the body taste of oil.

**[TABLE 19]**

| | Control | Addition of AATG | Addition of borage oil |
|---|---|---|---|
| Strength of aroma | - | ⊚ | ○ |
| Goodness of aroma | - | ⊚ | ○ |
| Strength of flavor | - | ⊚ | ○ |
| Goodness of flavor | - | ⊚ | ⊚ |
| Strength of taste | - | ⊚ | ○ |
| Goodness of taste | - | ⊚ | ⊚ |
| Strength of after taste | | ⊚ | ○ |
| Goodness of after taste | | ⊚ | ⊚ |

### Example 17 (Reference only)

### <Fat and oil for flavoring>

Fat and oil for flavoring was prepared by using the following fat and oil preparation.

### < Fat and oil preparation>

(1) PL oil
(2) 0.01 % AATG/PL oil (AA content of 0.004%)
(3) 0.1 % AATG/PL oil (AA content of 0.04%)
(4) 1% AATG/PL oil (AA content of 0.4%)
(5) 10% AATG/PL oil (AA content of 4%)
(6) 30% AATG/PL oil (AA content of 12%)

### < Preparation of fat and oil for flavoring>

The above fat and oil preparation (1 L) was heated to 120°C. After being mixed with finely chopped green onion (400g), the fat and oil preparation was stirred while being kept at 100°C until water evaporated completely from the green onion. The green onion was removed by filtration from the fat and oil composition to give oil for flavoring.

### <Sensory test of the oil for flavoring>

Instant noodles ("Sapporo Ichiban Shoyu-Aji" manufactured by Sanyo Foods Co. Ltd) were cooked in accordance with a manufacturer's instruction. The oil for flavoring (3g) was added to one portion of the cooked instant noodles and evaluated.

**[TABLE 20]**

| | (1) | (2) | (3) | (4) | (5) | (6) |
|---|---|---|---|---|---|---|
| Strength of aroma | - | ○ | ○ | ⊚ | ⊚ | ⊚ |
| Goodness of aroma | - | ○ | ○ | ⊚ | ⊚ | X |
| Strength of flavor | - | ○ | ⊚ | ⊚ | ⊚ | ⊚ |
| Goodness of flavor | - | ○ | ○ | ⊚ | ⊚ | X |
| Strength of taste | - | ○ | ○ | ⊚ | ⊚ | ⊚ |
| Goodness of taste | - | ○ | ○ | ⊚ | ⊚ | X |
| Strength of aftertaste | - | ○ | ○ | ⊚ | ⊚ | ⊚ |
| Goodness of aftertaste | - | ○ | ○ | ⊚ | ⊚ | X |

It was confirmed that the oil for flavoring with the body taste was prepared by using the fat and oil composition made of the long -chain highly unsaturated fatty acid and/or the ester thereof and the vegetable oil. Over-addition of the long-chain highly unsaturated fatty acid and/or the ester thereof would deteriorate the taste.

### Advantages of the invention

It has been confirmed that the body taste of foods can be enhanced and the original tastes of foods can be increased when the foods are mixed with the long-chain highly unsaturated fatty acid and/or the ester thereof or the vegetable fat and oil composition comprising a predetermined amount of the long-chain highly unsaturated fatty acid and/or the ester thereof, or when the foods are heated and cooked with the same vegetable fat and oil composition.

## Claims

1. A method for enhancing body taste of fish and shell extract, animal meat extract, yeast extract, and vegetable extract prepared by extraction from onion, garlic or cabbage, comprising adding a long-chain highly unsaturated fatty acid and/or an ester thereof to the extract, wherein the long-chain highly unsaturated fatty acid is a fatty acid having 20 or more of carbon atoms and 3 or more of double bonds in the case of n-3 fatty acids, and a fatty acid having 18 or more of carbon atoms and 3 or more of double bonds in the case of n-6 fatty acids.

2. A method for enhancing egg flavor of processed egg food, comprising adding a long-chain highly unsaturated fatty acid and/or an ester thereof to the processed egg food, wherein the long-chain highly unsaturated fatty acid is a fatty acid having 20 or more of carbon atoms and 3 or more of double bonds in the case of n-3 fatty acids, and a fatty acid having 18 or more of carbon atoms and 3 or more of double bonds in the case of n-6 fatty acids.

3. A method for enhancing body taste and fried-egg flavor of fried rice, comprising adding a long-chain highly unsaturated fatty acid and/or an ester thereof to the fried rice, wherein the long-chain highly unsaturated fatty acid is a fatty acid having 20 or more of carbon atoms and 3 or more of double bonds in the case of n-3 fatty acids, and a fatty acid having 18 or more of carbon atoms and 3 or more of double bonds in the case of n-6 fatty acids.

4. A method according to any one of Claims 1 - 3, wherein the long-chain highly unsaturated fatty acid is arachidonic acid.

5. A method according to any one of Claims 1 - 3, wherein the long-chain highly unsaturated fatty acid is an n-3 long-chain highly unsaturated fatty acid, and is obtainable by oxidization treatment.

6. A method according to any one of Claims 1 - 5, wherein the long-chain highly unsaturated fatty acid is derived from microorganism.

## Patentansprüche

1. Verfahren zum Verbessern des Körpergeschmacks von Fisch- und Meerestierextrakt, Tierfleischextrakt, Hefeextrakt und durch Extraktion von Zwiebeln, Knoblauch oder Kohl hergestelltem Pflanzenextrakt, welches das Zugeben einer langkettigen hochungesättigten Fettsäure und/oder eines Esters davon zu dem Extrakt umfasst, wobei die langkettige hochungesättigte Fettsäure eine Fettsäure mit 20 oder mehr Kohlenstoffatomen und 3 oder mehr Doppelbindungen im Fall einer n-3-Fettsäure und eine Fettsäure mit 18 oder mehr Kohlenstoffatomen und 3 oder mehr Doppelbindungen im Fall einer n-6-Fettsäure ist.

2. Verfahren zum Verbessern des Eiaromas von verarbeiteten Eiernahrungsmitteln, welches das Zugeben einer langkettigen hochungesättigten Fettsäure und/oder eines Esters davon zu dem verarbeiteten Eiernahrungsmittel umfasst, wobei die langkettige hochungesättigte Fettsäure eine Fettsäure mit 20 oder mehr Kohlenstoffatomen und 3 oder mehr Doppelbindungen im Fall von n-3-Fettsäuren und eine Fettsäure mit 18 oder mehr Kohlenstoffatomen und 3 oder mehr Doppelbindungen im Fall von n-6-Fettsäuren ist.

3. Verfahren zum Verbessern des Körpergeschmacks und des Spiegeleiaromas von gebratenem Reis, welches das Zugeben einer langkettigen hochungesättigten Fettsäure und/oder eines Esters davon zu dem gebratenen Reis umfasst, wobei die langkettige hochungesättigte Fettsäure eine Fettsäure mit 20 oder mehr Kohlenstoffatomen und 3 oder mehr Doppelbindungen im Fall von n-3-Fettsäuren und eine Fettsäure mit 18 oder mehr Kohlenstoffatomen und 3 oder mehr Doppelbindungen im Fall von n-6-Fettsäuren ist.

4. Verfahren nach einem der Ansprüche 1 bis 3, wobei die langkettige hochungesättigte Fettsäure Arachidonsäure ist.

5. Verfahren nach einem der Ansprüche 1 bis 3, wobei die langkettige hochungesättigte Fettsäure eine n-3 langkettige hochungesättigte Fettsäure ist und durch Oxidationsbehandlung erhältlich ist.

6. Verfahren nach einem der Ansprüche 1 bis 5, wobei die langkettige hochungesättigte Fettsäure von einem Mikroorganismus abgeleitet ist.

## Revendications

1. Procédé pour promouvoir le goût de corps de poisson et d'extrait de coquillage, d'extrait de viande animale, d'extrait de levure, et d'extrait de légume préparé par extraction à partir d'oignon, d'ail ou de poireau, comprenant l'addition d'un acide gras hautement insaturé à chaîne longue et/ou d'un ester de celui-ci à l'extrait, dans lequel l'acide gras hautement insaturé à chaîne longue est un acide gras ayant 20 atomes de carbone ou plus et 3 doubles liaisons ou plus dans le cas d'acides gras n-3, et un acide gras ayant 18 atomes de carbone ou plus et 3 doubles liaisons ou plus dans le cas d'acides gras n-6.

2. Procédé pour promouvoir la saveur d'oeuf d'un aliment d'oeuf transformé, comprenant l'addition d'un acide gras hautement insaturé à chaîne longue et/ou d'un ester de celui-ci à l'aliment d'oeuf transformé, dans lequel l'acide gras hautement insaturé à chaîne longue est un acide gras ayant 20 atomes de carbone ou plus et 3 doubles liaisons ou plus dans le cas d'acides gras n-3, et un acide gras ayant 18 atomes de carbone ou plus et 3 doubles liaisons ou plus dans le cas d'acides gras n-6.

3. Procédé pour promouvoir le goût de corps et la saveur d'oeuf frit de riz frit, comprenant l'addition d'un acide gras hautement insaturé à chaîne longue et/ou d'un ester de celui-ci au riz frit, dans lequel l'acide gras hautement insaturé à chaîne longue est un acide gras ayant 20 atomes de carbone ou plus et 3 doubles liaisons ou plus dans le cas d'acides gras n-3, et un acide gras ayant 18 atomes de carbone ou plus et 3 doubles liaisons ou plus dans le cas d'acides gras n-6.

4. Procédé selon l'une quelconque des revendications 1-3, dans lequel l'acide gras hautement insaturé à chaîne longue est l'acide arachidonique.

5. Procédé selon l'une quelconque des revendications 1-3, dans lequel l'acide gras hautement insaturé à chaîne longue est un acide gras hautement insaturé à chaîne longue n-3, et peut être obtenu par un traitement d'oxydation.

6. Procédé selon l'une quelconque des revendications 1-5, dans lequel l'acide gras hautement insaturé à chaîne longue est dérivé de microorganisme.
